# EUROPEAN PATENT APPLICATION

(11) **EP 1 972 865 A2**
(43) Date of publication of application: **24.09.2008**
(21) Application number: 08004403.5
(22) Date of filing: 10.03.2008
(51) Int. Cl.: F24H 3/00, F24H 9/18

(54) **Adjustable heating element**

(30) Priority: 12.03.2007 IT AN20070007 U
(71) Applicant: Ad Hoc S.r.l., 60025 Loreto (AN) (IT)
(72) Inventor: Ragaini, Stefano, 60025 Loreto (AN) (IT)
(74) Representative: Gentili, Enrico

(57) **Abstract**

Heating element (1, 1b) for room heating comprising an emitter (101), suitable for yielding heat to the room it is in, both by natural convection and by radiation in the infrared and rotation means (2) suitable for constraining the heating element (1, 1b) to a wall (301) and for allowing the rotation thereof.
Said rotation is allowed during the operating conditions to an extent sufEcient for changing the maximum intensity direction of the infrared radiation emitted by the heating element (1, 1b) Itself thus improving room heating.

## Description

The object of the present invention is an electrical heating body, preferably of an aluminium alloy, for room heating or similar applications.

More in particular, the object of the present invention are heating elements, combinable with each other for forming a room heating body, and adjustable independently of each other.

As known, brackets and/or anchors are mainly used for attaching to a wall a heating body for room heating, electrical or hydraulic, permanently fixed to the wall itself.

In these conditions, access to the back wall and to the zones immediately nearby is hindered by the heating body itself and is therefore attainable only by the optional removal thereof; inspection and/or maintenance of the heating body or cleaning operations in the narrow space between the heating body and the back wall, or whitewashing of the same wall, would be very complex and burdensome. Moreover, before removing the heating body, of course if this is of the hydraulic type, it would be necessary to drain and discharge the thermal carrier fluid to prevent damages and flooding.

A solution to these disadvantages was provided by heating bodies capable of rotating, through hinges or pins, from the operating position thereof to a position that makes said wall accessible without necessarily having to remove the heating body from the support brackets.

Document WO 00/14453 illustrates, to this aim, a hydraulic heating body comprising a radiant panel, channels distributing the thermal carrier fluid and means for attaching the heating body to a wall capable of allowing a rotation around a vertical axis. Said rotation allows the radiant panel to "open door-wise" relative to the back wall. A side end of the heating body, the one provided with the fastening means, therefore remains removably constrained to the wall, whereas the opposite end is temporarily suspended into the room. For this reason, the heating body described in the present document is also provided with recessed and/or telescopic support devices capable of relieving the weight of the heating body mainly to the ground, thus relieving the load on the same fastening and rotation means.

The rotation of the heating body therefore makes both the back surface of the heating body and the wall occupied thereby easily accessible by any user and for any operation.

Documents GB 2 297 828, GB 2 424 266 and GB 2 374 405 show a heating body attached to a wall but provided with a forward "pivoting" movement, wherethrough the back wall is made accessible without necessarily proceeding to the removal of the heating body itself.

More in particular, document GB 2 374 405 shows a beating body capable of rotating around a horizontal axis of rotation substantially passing by the fulcrum of a hinge arranged at the bottom end of the side of the heating body and in the proximity of the inlet and/or outlet of the thermal carrier fluid. Thanks to this rotation, the heating body is therefore capable of tilting extending forward relative to the wall whereto, in the standard operating conditions, it is attached and locked by support devices,

The rotation of the heating body is also ensured by some construction devices such as the use of flexible ducts for connecting the heating body to the hydraulic system, while at the end of the rotation itself, the locking of the heating body, in the maximum opening position thereof, is ensured by devices of connection to the wall, such as small chains, capable of making the back wall accessible in full safety and without the risk of further and accidental rotations of the heating body itself.

However, as is clear from the documents mentioned above, the rotation of the heating body around an axis, either horizontal or vertical, has the only purpose of making the back surface of the heating body itself as well as the wall portion engaged thereby accessible, so as to facilitate and speed up the maintenance operations on the heating body or operations for cleaning, renovating and retouching the wall itself. In fact, said beating bodies are too cumbersome for being kept open in operating conditions.

Radiant heaters are also known, designed for emitting most of the heat in the form of infrared radiation. These are heaters provided with electrical incandescence resistance or a gas burner and provided with a reflector for better diffusing the infrared radiation emitted and the so-called catalytic gas heaters that emit a good share of the heat in the form of infrared radiation.

Known radiant heaters exhibit the advantage, by simply changing the position thereof, to directing most of the radiated heat in the preferred direction, whereto however, the disadvantage of a quite uneven heat dispensing is associated, not suitable for all the situations; moreover, they are hazardous appliances as they reach very high temperatures, capable of causing bums for accidental contacts.

The standard heating bodies attached to the wall, hereinafter referred to as "conventional heating bodies", either with thermal carrier fluid and electrical, emit heat in proper proportion both by convective exchanges and by radiance and do not achieve hazardous temperatures; on the contrary, since they are fixed bodies, they do not allow being adjusted for directing the infrared emission towards any directions each time preferred by the user.

A first aim of the present invention is to provide heating elements for room heating capable of rotating in operating conditions.

A second aim of the present invention is to provide beating elements for room heating capable of adjusting as desired, at least partly, the preferential direction of the heat flow emitted by radiance.

A third aim of the present invention is to provide heating elements capable of ensuring and improving the accessibility to the zones and/or walls occupied by said heating elements.

A fourth aim of the present invention is to provide heating sets comprised of two or more heating elements suitable for being rotated, in operating conditions, the one separately of the other without causing unacceptable obstructions.

A further aim of the present invention is to allow said heating elements to operate at the same temperatures as the above conventional heating bodies.

Figure 1 shows a plan view of a heating body according to the invention.

Figures 2a and 2b respectively show a front and a side view of the heating element according to the invention.

Figures 3a, 3b, 3c and 3d show multiple top views of a combination as a set of multiple heating elements according to the invention.

Figure 4 shows a heating element according to an embodiment version and in particular a combination of multiple elements as a set according to this embodiment version.

With reference to figures from 3a to 3d and 4, a set 3 is shown, comprising multiple heating elements 1, said heating elements 1 being elongated bodies.

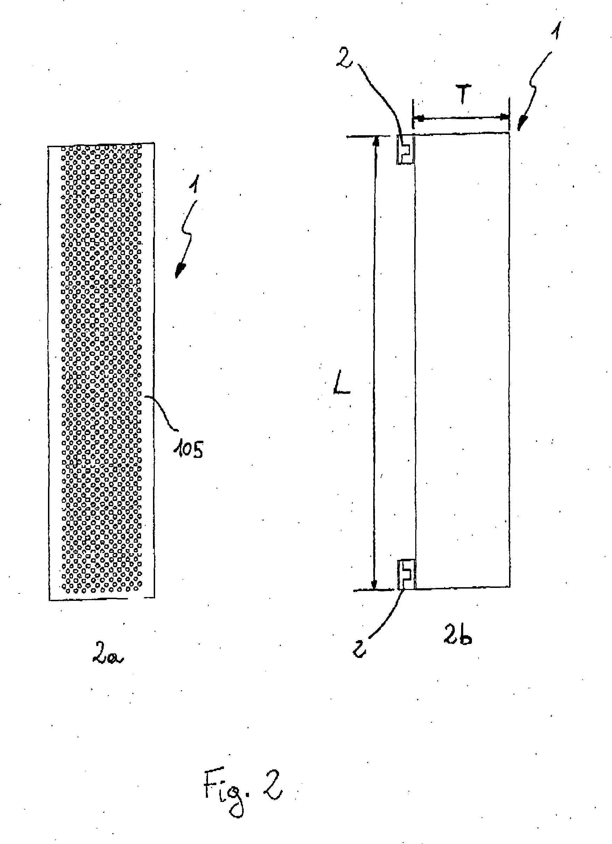

By elongated body it is meant, hereinafter, a body whose longitudinal dimension L is considerably greater than the cross dimensions thereof T (see, for example, figure 2b); more precisely, a body with L ≥ 2T.

Each heating element 1 comprises an inner electrical resistance according to the art, not shown, of the cartridge type, with spiral filament immersed in magnesium powder or printed and allows room heating both by convection and by radiance.

In fact, said heating element 1 is connected, according to known means, to the electrical system of the utility to be heated and comprises switches and/or buttons, not shown, suitable for disconnecting or connecting, manually or automatically, said heating element 1 from/to the electrical system.

Each heating element 1 of said set 3 is fixable to a wall 301 and comprises, in particular, rotation means 2 capable of assuring the rotation thereof, separately of each other, about a vertical or horizontal axis according to how the heating element 1 is attached to wall 301.

At the end of the rotation of each heating element 1 of set 3 it is possible to easily access the back wall 301 occupied by the same beating elements 1 without, in the first place, their removal and with the minimum obstruction on the room to be heated, unlike what happens with the rotation of all the heating body and as already described in the art.

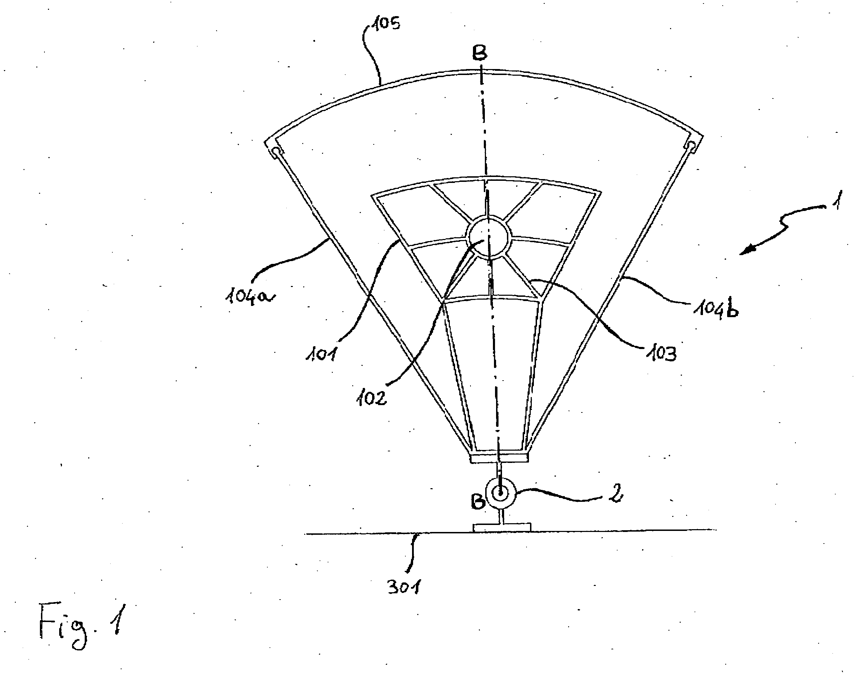

A heating element 1 of said set 3 with substantially triangular plan is shown in higher detail in figures 1 and 2.

Reference numeral 101 indicates a heat emitting element, hereinafter simply referred to as emitter, substantially placed at the centre of said heating element 1 and provided with a seat 102 for the resistance crossed by electrical current.

Said emitter 101 heats the surrounding room by natural convection and by infrared radiation.

Reference numeral 103 indicates fins suitable for increasing the exchanging surface of said emitter 101 and thus, the efficiency of heat exchange by natural convection.

The rotation means 2 preferably consist in at least two hinges, with vertical axis of rotation passing by their fulcrum, arranged on top of the heating element 1 and in particular one at the top end and one at the opposite bottom end of the heating element 1 itself (in particular, see figure 2b). Said hinges 2 are then attached by known means to wall 301.

Reference numerals 104a and 104b indicate two baffles arranged at the sides, respectively on the left and on the right, of said emitter 101.

Said baffles 104a and 104b enlarge around said emitter 101 according to two directions diverging from one another starting from the back end of the heating element 1.

Baffles 104a and 104b therefore impart, to the heating element 1, the appearance of a spotlight with rectilinear development, and actually they allow directing the radiant flow heat produced by said emitter 101 according to preferential directions, substantially delimited by surfaces of said two baffles 104a and 104b, the inside surfaces of baffles 104a and 104b themselves being made capable of reflecting the infrared radiation for example by a simple adequate polishing.

According to a preferred but non-exclusive embodiment of the heating element 1, reference numeral 105 further indicates a screen that frontally closes the heating element 1 itself, preventing direct and/or accidental contact with emitter 101, and that at the same time imparts also a more pleasant aesthetic appearance to the heating clement 1 itself.

Means 105 may be a screen that allows the passage of the infrared radiation, in particular a screen transparent thereto.

Among infrared-transparent materials are some plastic materials, such as polyethylene, or mineral substances like quartz.

As an alternative to the use of infrared-transparent materials, said screen 105 may be suitably pierced so as to ensure a sufficient free surface for the passage of said infrared radiation without substantial attenuations of the emission (see figure 2a).

Finally, said screen 105 is connected at the ends thereof to the relevant baffles 104a and 104b for example hy elastic coupling and it can be easily removed to facilitate inspection and maintenance operations on the same emitter 101.

The rotation of the heating element 1 therefore allows the user to direct a good share of heat emitted by radiation towards preferred directions.

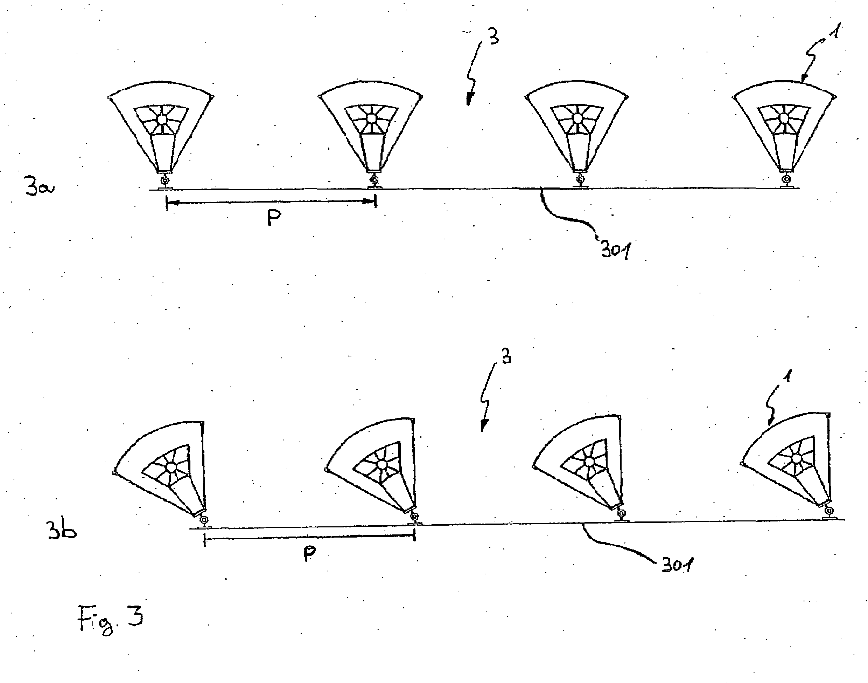

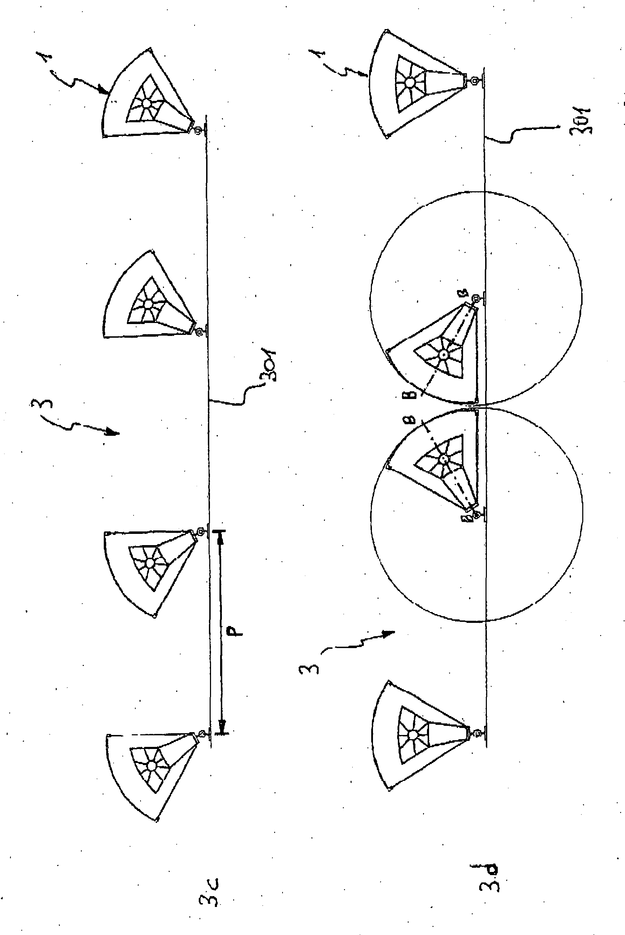

Going now to figures 3a, 3b, 3c and 3d, as already mentioned before, reference numeral 3 indicates a set comprising multiple heating elements 1 side by side.

With reference in particular to figures 3b and 3c, if step P between two consecutive heating elements 1 of said set 3 is greater than or equal to, twice the dimension thereof according to axis B-B, the heating elements 1 themselves may be adjusted independently of each other without interfering.

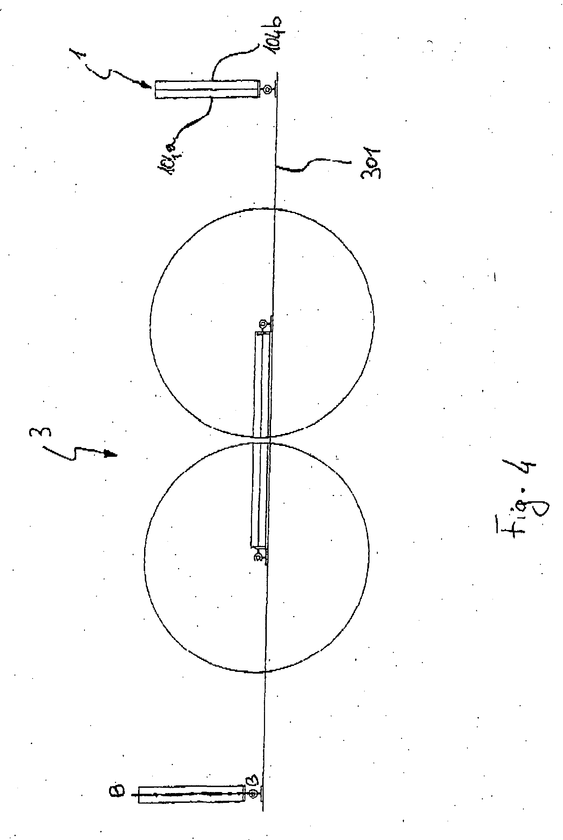

With reference to figure 4, a second version of the invention is shown that envisages heating elements 1b, in se known, always elongated but substantially flat, with substantially rectangular cross section, and comprising an electrical resistance too, not shown, arranged between two shells 104a and 104b preferably of extruded or die-cast aluminium alloy.

Any flat radiant body, unless it is the "ideal black body", perfectly opaque, emits infrared radiation in an anisotropic manner, with maximum intensity of the flow in a direction orthogonal to the surface thereof Also with said heating elements 1b, therefore, if suitably rotated, the direction of the infrared emission may be changed by the user, even if to a much lesser extent than with the heating elements 1.

Said heating elements 1 b are therefore provided always with the same rotation means 2.

Also in this version the adjacent heating elements 1b in a set 3 may be spaced from one another by a step P greater than or at least equal to twice the dimension thereof according to axis B-B.

By way of an example only and without any limiting purpose, said heating elements 1 or 1b may be made with different heights in order to adjust to any need and desire of the user, starting from a minimum of 30-50 cm to a maximum of 150-200 cm.

It is clear that several versions of the heating element 1 or 1b are possible to the man skilled in the art, without departing from the novelty scopes of the inventive idea, as well as it is clear that in the practical embodiment of the invention the various components described above may be replaced with technically equivalent ones.

For example, in the above description reference was made to heating elements 1 or 1b of the electrical type; however, nothing prevents said elements 1, 1b Rom being "hydraulic" provided with distributing channels for the passage of the thermal carrier fluid arranged in parallel that lead, for example, to two headers, one for delivery and one for return, arranged at the end and in turn connected to the hydraulic system by flexible ducts capable of adjusting to the rotation of the same heating element 1.

Even by spacing the adjacent heating elements 1 or 1b of set 3 by a step P smaller than that indicated as preferred, favouring aesthetic and obstruction-reduction requirements at the utmost freedom of adjustment, they continue to be adjustable independently of one another and according to a wide range of directions.

A possible version of the invention envisages the vertical arrangement of the heating elements 1, on top of one another, so as to occupy wall 301 in height.

In conclusion, besides facilitating access to the back wall, as per prior art, therefore, the heating element 1 according to the invention allows favouring the emission of the infrared radiation towards directions changeable by the user.

## Claims

1. Heating element (1, 1b) for room heating, comprising:
- an emitter (101) suitable for yielding beat to the room it is in both by natural convection and by infrared radiation,
- rotation means (2) suitable for
- constraining the heating element (1) to a wall (301)
- and allowing the rotation thereof
**characterised in that**
said rotation is allowed during the operating conditions to an extent sufficient for changing the maximum intensity direction of the infrared radiation emitted by the heating element (1, 1b) itself.

2. Heating element (1, 1b) according to the previous claim
**characterised in that** it consists in an elongated body whose longitudinal dimension (L) is at least equal to twice the cross dimensions thereof (T).

3. Heating clement (1, 1b) according to any one of the previous claims
**characterised in that**
said heating element (1, 1b) is a body (1) with substantially triangular cross section.

4. Heating element (1) according to the previous claim
**characterised in that**
said infrared radiation emitted is concentrated in preferential directions substantially delimited by surfaces of two baffles (104a, 104b)
- arranged at the sides of said emitter (101)
- and extending from said emitter (101) according to two directions diverging starting from the back end of the heating element (1).

5. Heating element (1) according to the previous claim
**characterised in that**
said baffles (104a, 104b) are provided with inside surfaces reflecting the infrared radiation.

6. Heating element (1) according to any one of the previous claims from 3 on
**characterised in that**
it further comprises a screen (105) suitable for
- frontally closing the heating element (1) itself,
- while allowing the passage of the infrared radiation.

7. Heating element (1) according to the previous claim 6
**characterised in that**
said screen (105) is constructed in an infrared-transparent material.

8. Heating element (1) according to the previous claim 6
**characterised in that**
said means (105) is a pierced screen so as to allow a sufficient free surface for the passage of the infrared radiation.

9. Heating element (1, 1b) according to claims 1 or 2
**characterised in that**
said heating element (1, 1b) is a body (1b) with substantially rectangular section.

10. Heating element (1, 1b) according to any one of the previous claims
**characterised in that**
said rotation means (2) arc preferably hinges arranged at the back of the heating element (1, 1b), and in particular at the top end and at the opposite bottom end of said heating element (1, 1b) and attached by known means to a wall (301).

11. Heating element (1, 1b) according to any one of the previous claims
**characterised in that**
it is provided with fins (103) that increase the thermal exchange surface by natural convection and thus the efficiency of the thermal exchange with the surrounding room.

12. Heating element (1, 1b) according to any one of the previous claims
**characterised in that**
it is an electrical heating body

13. Heating element (1, 1b) according to any one of the previous claims except for 12
**characterised in that**
it is a hydraulic heating body.

14. Room heating set (3)
**characterised in that**
it comprises one or more heating elements (1, 1b) according to one or more of the previous claims.

15. Room heating set (3) according to the previous claim
**characterised in that**
at least two of said heating elements (1, 1b) are provided,
the heating elements (1, 1b) themselves being arranged adjacent with step (P) and said step (P) being at least twice the dimension according to the axis (B-B) of said heating elements (1).
